# EUROPÄISCHE PATENTSCHRIFT

(11) **EP 3 642 478 B1**
(45) Veröffentlichungstag und Bekanntmachung des Hinweises auf die Patenterteilung: **20.07.2022**
(21) Anmeldenummer: 18735222.4
(22) Anmeldetag: 21.06.2018
(51) Int. Cl.: F03D 7/02, F16H 57/01, F03D 15/00

(54) **ABTRIEBSEINHEIT EINES PITCHANTRIEBS UND/ODER EINES AZIMUTANTRIEBS EINER WINDENERGIEANLAGE UND VERFAHREN**
OUTPUT UNIT OF A PITCH DRIVE AND/OR OF A YAW DRIVE OF A WIND TURBINE, AND METHOD
UNITÉ DE PRISE DE FORCE D'UN ENTRAÎNEMENT DE PAS DE PALE ET/OU D'UN ENTRAÎNEMENT D'AZIMUT D'UNE ÉOLIENNE ET PROCÉDÉ

(30) Priorität: 21.06.2017 DE 102017113640
(43) Veröffentlichungstag der Anmeldung: 29.04.2020
(73) Patentinhaber: Wobben Properties GmbH, 26607 Aurich (DE)
(72) Erfinder: PETER, Dennis, 26723 Emden (DE); JÜRGENS, Hermann, 26446 Friedeburg (DE); BINDER, Oliver, 26605 Aurich (DE)
(74) Vertreter: Eisenführ Speiser
(86) Internationale Anmeldenummer: PCT/EP2018/066568
(87) Internationale Veröffentlichungsnummer: WO 2018/234442

(56) Entgegenhaltungen:
- WO-A1-2011/104433
- DE-A1-102016 002 006
- DE-U1-202016 106 888
- US-A1- 2014 349 815
- US-A1- 2015 361 956

## Beschreibung

Die Erfindung betrifft eine Abtriebseinheit eines Pitchantriebs und/oder eines Azimutantriebs einer Windenergieanlage, einen Pitchantrieb einer Windenergieanlage, einen Azimutantrieb einer Windenergieanlage, eine Windenergieanlage sowie ein Verfahren zur Herstellung einer Abtriebseinheit und ein Verfahren zur Kalibrierung einer Abtriebseinheit.

Windenergieanlagen sind allgemein bekannt. Die dominierende Bauform von Windenergieanlagen ist die dreiblättrige Horizontalachsen-Windenergieanlage, bei der sich der Rotor im Betrieb auf der Luvseite befindet und deren Maschinenhaus auf dem Turm angeordnet ist und der Windrichtung aktiv, insbesondere durch eine Azimutverstelleinheit, nachgeführt wird. Ferner ist es üblich, dass die Rotorblätter um ihre Längsachse mittels einer Pitchverstelleinheit gedreht werden können. Auch allgemein bekannt ist die Verwendung von Zahnradanordnungen für Drehverbindungen bei Windenergieanlagen an den Stellen, an denen Bauteile rotatorisch relativ zueinander bewegt werden, und insbesondere, wo eine Übersetzung von einem ersten rotierenden Bauteil zu einem zweiten rotierenden Bauteil realisiert werden soll.

Zur Blattverstellung wird vom Pitchantrieb auf das Rotorblatt und zur Azimutverstellung vom Azimutantrieb auf den Turm ein hohes Antriebsmoment übertragen, dass auch in hohen Belastungen der beteiligten mechanischen Komponenten resultiert. Gleichzeitig sind aber der Pitchantrieb, als auch der Azimutantrieb meist sicherheitsrelevante Komponenten. Aufgrund dessen bestehen verschiedene Ansätze zur Auslegung dieser mechanischen Komponenten. Ferner ist der Trend zu erkennen, dass eine stetig wachsende Anzahl an Komponenten zertifiziert werden muss.

Die Norm IEC 61400 enthält beispielsweise in mehreren Teilen technische Anforderungen an Windenergieanlagen. Diese Norm dient dem Zweck, dass Windenergieanlagen sachgerecht entwickelt werden und die geplante Lebensdauer ohne Schäden erreichen. Die Norm betrifft unter anderem die Bereiche Standorteignung, Montage und Betrieb von Windenergieanlagen, aber auch die Prüfung ihrer Komponenten. Insbesondere die IEC Norm 61400-13 erfordert die Messung von mechanischen Lasten an verschiedenen Bauteilen bzw. Bauteilpaarungen einer Windenergieanlage. Unter anderem schreibt diese Norm vor, dass jegliche Pitchgetriebe einer Windenergieanlage in Bezug auf das zu übertragende Antriebsmoment vermessen werden müssen, wenn diese Windenergieanlage für eine Leistung von mehr als 1500 kW ausgebildet ist und einen Rotordurchmesser von mehr als 75 Metern aufweist.

Im Stand der Technik wird das Antriebsmoment des Pitchgetriebes, welches im Wesentlichen als ein Torsionsmoment vorliegt, mittels eines speziell konstruierten Adapters gemessen, der zwischen dem Pitchgetriebe und dem Pitchmotor angeordnet wird. Ferner umfasst dieser Messaufbau eine Messwelle mit speziellen Wellenkupplungen. Der Aufbau mittels Adapter, Messwelle und Wellenkupplungen ist lediglich für die Zertifizierung vorgesehen und wird nach Abschluss der Messung für die Zertifizierung wieder demontiert.

Darüber hinaus ist derzeit in der Windenergieanlagenbranche ein stetig zunehmender Kostendruck festzustellen. Aufgrund dessen werden kosteneffizientere Konstruktionen angestrebt. Ein Ergebnis der kosteneffizienteren Konstruktionen besteht darin, dass Material eingespart wird und somit auch häufig weniger Bauraum zu Verfügung steht. Diese Entwicklung ist auch bei Pitchantrieben und/oder Azimutantrieben zu erkennen. Folglich besteht bei einer Vielzahl von Pitch- und/oder Azimutantrieben wenig Bauraum zur Verfügung, sodass die Anordnung des Adapters, der Messwelle und der Wellenkupplung erschwert oder nicht möglich ist. Darüber hinaus besteht nach Demontage des Adapters, der Messwelle und der Wellenkupplungen keine Möglichkeit mehr, das übertragene Antriebsmoment des Pitchantriebs und/oder Azimutantriebs zu messen.

Die US 2014/0349815 A1 beschreibt ein Planetengetriebe mit einer Antriebswelle und einer Abtriebswelle, wobei die Abtriebswelle einen Drehmoment-Sensor umfasst. Die deutsche Offenlegungsschrift DE 10 2016 002 006 A1 beschreibt eine Windenergieanlage mit Verstellantrieben für den Azimutantrieb und den Pitchantrieb, wobei die Verstellantriebe mit einer Verspannungseinstelleinrichtung versehen sind. Die US 2015/361956 A1 beschreibt eine Windenergieanlage mit einer Antriebssteuereinheit, die ein bewertetes Drehmomentmesssignal an eine Basis senden kann.

Das Deutsche Patent- und Markenamt hat in der Prioritätsanmeldung zu vorliegender Anmeldung folgenden Stand der Technik recherchiert: DE 10 2011 085 299 A1; DE 10 2011 119 466 A1; DE 10 2016 002 006 A1, EP 2 003 334 A1 und WO 2011/026616 A1.

Der vorliegenden Erfindung liegt daher die Aufgabe zugrunde, wenigstens eines der genannten Probleme zu adressieren. Insbesondere soll eine vereinfachte Lösung zum Aufnehmen eines Antriebsmomentes in einem Pitchantrieb oder einem Azimutantrieb vorgeschlagen werden. Zumindest soll zu bisher bekannten Lösungen eine alternative Lösung gefunden werden.

Erfindungsgemäß wird eine Abtriebseinheit gemäß Anspruch 1 vorgeschlagen. Gemäß diesem ersten Aspekt der vorliegenden Erfindung wird somit eine Abtriebseinheit eines Pitchantriebs oder eines Azimutantriebs einer Windenergieanlage, vorgeschlagen, die ein Wellenelement, mit einer Drehachse und einer koaxial zur Drehachse angeordneten Außenumfangsfläche umfasst, das sich in axialer Richtung von einem Antriebsende zu einem Abtriebsende erstreckt, zum Übertragen eines Antriebsmomentes zum Abtriebsende, ein an dem Abtriebsende koaxial zur Drehachse angeordnetes Ritzel, oder eine Ritzelaufnahme zum drehfesten Aufnehmen eines solchen Ritzels, wobei sich ein Kabelkanal von der Außenumfangsfläche durch das Wellenelement zum Antriebsende oder zum Abtriebsende erstreckt, wobei an der Außenumfangsfläche mindestens ein erster Dehnungsmessstreifen mit mindestens einem ersten Messkabel angeordnet ist, wobei sich das wenigstens eine erste Messkabel von dem wenigstens einen ersten Dehnungsmessstreifen durch den Kabelkanal zum Antriebsende oder zum Abtriebsende erstreckt.

Ein Pitchantrieb oder Azimutantrieb weist einen Antriebsmotor auf, der üblicherweise über ein Getriebe eine Abtriebswelle antreibt. Der Antriebsmotor ist dabei schnelldrehend mit kleinem Drehmoment und die Abtriebswelle langsamdrehend mit großem Drehmoment. Das große Drehmoment wird dann von der Abtriebswelle über ihr Ritzel an einen großen Zahnkranz übertragen im Bereich einer Rotorblattwurzel, um das Rotorblatt zu verstellen, bzw. im Bereich eines Übergangs zwischen Turm und Gondel, um die Gondel zu verstellen.

Die Abtriebseinheit kann daher synonym auch als Abtriebswelle bezeichnet werden, wobei die Abtriebseinheit bzw. die Abtriebswelle das Ritzel oder die Ritzelaufnahme aufweist. Das Wellenelement erstreckt sich in axialer Richtung von dem Antriebsende zu dem Abtriebsende, wobei die axiale Richtung parallel zur Drehachse ausgerichtet ist. Das Wellenelement weist vorzugsweise einen kreisrunden, ovalen oder polygonalen Wellenquerschnitt auf. Der Wellenquerschnitt ist unabhängig von gegebenenfalls an dem Wellenelement anzuordnenden Elementen, wie beispielsweise Passfedernuten, zu verstehen. Der Querschnitt kann in axialer Richtung konstant oder variabel ausgebildet sein. Vorzugsweise weist das Wellenelement zumindest abschnittsweise eine konische Form auf.

Das Wellenelement ist somit zum Übertragen eines Antriebsmoments zum Abtriebsende ausgebildet. Dabei müssen beispielsweise Antriebsmomente von 250000 Nm übertragen werden. Zur Übertragung derartiger Antriebsmomente ist das Wellenelement vorzugsweise als Vollwelle ausgebildet. Vollwellen zeichnen sich insbesondere durch eine kompakte Bauweise aus, die im Gegensatz zu Hohlwellen große Antriebsmomente übertragen können und einen vergleichsweise geringen Bauraum benötigen.

An dem Abtriebsende ist koaxial zur Drehachse das Ritzel oder die Ritzelaufnahme angeordnet. Das Wellenelement weist somit an seinem einen Ende das Ritzel auf, das integral mit dem übrigen Wellenelement geformt sein kann, oder aufgesetzt sein kann.

Der Kabelkanal erstreckt sich von der Außenumfangsfläche durch das Wellenelement zum Antriebsende oder zum Abtriebsende. Durch diesen Kabelkanal kann ein Messkabel von der Außenumfangsfläche bis zum Antriebsende oder Abtriebsende geführt werden. Der Kabelkanal kann vorzugsweise zunächst von einer ersten Kanalöffnung an der Außenumfangsfläche zur Drehachse und von dort weiter zu einer zweiten Kanalöffnung am Antriebsende oder Abtriebsende verlaufen.

Vorzugsweise wird der Kabelkanal mittels einer, zweier oder mehrerer Bohrungen in das Wellenelement eingebracht.

Gemäß einer Ausführungsform wird vorgeschlagen, dass der Kabelkanal einen ersten Kabelkanalabschnitt und einen zweiten Kabelkanalabschnitt aufweist, wobei sich der erste Kabelkanalabschnitt koaxial zur Drehachse von dem Abtriebsende oder dem Antriebsende aus in das Wellenelement hinein erstreckt. Dazu erstreckt sich der zweite Kabelkanalabschnitt von der Außenumfangsfläche aus in radialer Richtung zu dem ersten Kabelkanalabschnitt. Alternativ erstreckt sich der zweite Kabelkanalabschnitt in radialer und axialer Richtung, also schräg zur Drehachse, und trifft im Bereich der Drehachse auf den axial ausgerichteten ersten Kabelkanalabschnitt. Alternativ kann der Kabelkanal aus einem einzelnen geraden oder gebogenen Abschnitt besteht.

Eine besonders bevorzugte Fortbildung der Abtriebseinheit sieht vor, dass diese zwei oder mehr Kabelkanäle umfasst. Dies kann insbesondere dann vorgesehen sein, wenn zwei oder mehr Dehnungsmessstreifen auf der Außenumfangsfläche angeordnet werden. Insbesondere wird vorgeschlagen, die Dehnungsmessstreifen jeweils angrenzend an eine Öffnung des Kabelkanals an der Außenumfangsfläche anzuordnen.

Der mindestens eine Dehnungsmessstreifen ist an der Außenumfangsfläche angeordnet. Der oder die angeordneten Dehnungsmessstreifen können als elektrische Dehnungsmessstreifen ausgebildet sein.

Dehnungsmessstreifen sind Messelemente zur Erfassung von dehnenden und stauchenden Verformungen. Die Funktion von Dehnungsmessstreifen kann auf der Änderung des elektrischen Widerstands durch Längen- und/oder Querschnittsänderungen beruhen. Auf Grundlage der Widerstandsveränderung kann auf den positiven und/oder negativen Wert der Dehnung, also auf Dehnung oder Stauchung, geschlossen werden. Bei der vorgeschlagenen Antriebseinheit kann aus der Dehnung bzw. Stauchung auf eine Torsion geschlossen werden. Auf Basis bekannter Materialeigenschaften des Wellenelementes kann daraus ein anliegendes Drehmoment, hier nämlich Antriebsmoment, bestimmt werden. Alternativ kann das Antriebsmoment durch einen vorbestimmten Zusammenhang zwischen Spannungsänderung des Dehnungsmessstreifens und Antriebsmoment ermittelt werden. Dieser Zusammenhang kann beispielsweise experimentell im Rahmen einer Kalibrierung ermittelt werden.

Bei der vorgeschlagenen Anordnung des ersten Dehnungsmessstreifens an der Außenumfangsfläche des Wellenelements ergibt sich vorzugsweise ein positiver Zusammenhang zwischen einem auf das Wellenelement wirkenden Antriebsmoment und einem Ausgangssignal des ersten Dehnungsmessstreifens. Vorzugsweise ist das Ausgangssignal eine Ausgangsspannung. Mit anderen Worten gilt, dass je größer das Antriebsmoment ist, desto größer die zu messende Spannung ist. Das Ausgangssignal wird insbesondere über das erste Messkabel weitergeleitet. Das wenigstens eine erste Messkabel erstreckt sich von dem ersten Dehnungsmessstreifen durch den Kabelkanal zum Antriebsende oder zum Abtriebsende. Dadurch kann ein Ausgangssignal des ersten Dehnungsmessstreifens am Antriebsende oder am Abtriebsende übertragen werden. Das erste Messkabel kann aus einem, zweien oder mehreren Einzelkabeln bestehen oder ein, zwei oder mehrere Einzelkabel umfassen. Am Antriebsende oder Abtriebsende kann dann das so erfasste Signal besser ausgewertet oder weitergeleitet werden.

Es liegt hier unter anderem die Erkenntnis zugrunde, dass trotz reduzierter Platzverhältnisse innerhalb eines Pitchantriebs oder eines Azimutantriebs weiterhin das Antriebsmoment zumindest im Rahmen eines Zertifizierungsvorgangs gemessen werden muss. Bestehende Möglichkeiten mit Hohlwellen können hier nicht eingesetzt werden, da diese einen zu hohen Platzbedarf aufweisen und keine hinreichende Festigkeit bei angemessenem Bauraumbedarf bieten. Ferner liegt die Erkenntnis zugrunde, dass die Antriebsmomentmessung im Bereich zwischen dem Ritzel und der Getriebestufen besondere Vorteile bietet. Die Drehzahl ist in diesem Messbereich, das heißt zwischen Ritzel und Getriebestufen, niedriger als in einem Bereich vor den Getriebestufen. Dadurch ist der Effekt von Fliehkräften aber auch von Vibrationen und weiteren Schwingungen gering. In Folge dessen können validere und genauere Messergebnisse erzielt werden.

Durch die Anordnung der Dehnungsmessstreifen unmittelbar an der Abtriebseinheit kann eine besonders genaue Messung des Antriebsmoments erreicht werden, weil an der Abtriebswelle das vollständige Antriebsmoment anliegt. Stattdessen liegt in einem Bereich zwischen dem Motor und den Getriebestufen ein geringeres Drehmoment an, das erst in das Drehmoment an der Abtriebseinheit umgerechnet werden müsste. Außerdem kann ein Getriebe verlustbehaftet sein, so dass durch das Getriebe die Messung auch verfälscht werden kann. Die vorgeschlagene Lösung schafft eine besonders robuste und langlebige Möglichkeit zur Messung des Antriebsmoments. Diese Lösung ist außerdem kostengünstig und auf einfache Art und Weise herstellbar und montierbar. Ferner kann die vorgeschlagene Abtriebseinheit auch zur Antriebsmomentmessung während des Betriebes einer Windenergieanlage eingesetzt werden. Somit kann diese nicht nur zum Zwecke der Zertifizierung, sondern auch als Überwachungselement eingesetzt werden.

In einer bevorzugten Ausführungsvariante der Abtriebseinheit ist vorgesehen, dass sich der Kabelkanal von der Außenumfangsfläche durch das Wellenelement zu einer Stirnstelle am Antriebsende oder am Abtriebsende erstreckt, und die Stirnstelle und/oder eine Öffnung des Kabelkanals im Bereich der Drehachse an dem Wellenelement angeordnet ist. Insbesondere ist es bevorzugt, dass eine Durchtrittsachse der Öffnung des Kabelkanals im Bereich der Stirnstelle koaxial zur Drehachse ausgerichtet ist. Durch eine derartige Anordnung des Kabelkanals besteht die Möglichkeit, durch diesen Kabelkanal zumindest das erste Messkabel hindurchzuführen. Das erste Messkabel erfährt im Wesentlichen nur eine Drehbewegung und im Wesentlichen keine Kreisgeschwindigkeit. In Folge dessen kann ein vom ersten Messkabel übertragenes Ausgangssignal durch geeignete Abnehmervorrichtungen besonders vorteilhaft erfasst werden.

Eine weitere bevorzugte Fortbildung der Abtriebseinheit sieht vor, dass an der Stirnstelle eine Datenübertragungsvorrichtung angeordnet ist, und die Datenübertragungsvorrichtung mittels des ersten Messkabels mit dem mindestens einen ersten Dehnungsmessstreifen gekoppelt ist und die Datenübertragungsvorrichtung zur elektrischen Datenübertragung von der Abtriebseinheit zu einem Datenempfänger ausgebildet ist und wobei die Datenübertragungsvorrichtung vorzugsweise einen Schleifringübertrager aufweist, zur elektrischen Datenübertragung von einem drehenden zu einem stehenden Teil. Durch eine derartige Datenübertragungsvorrichtung, gegebenenfalls in Kombination mit einem Datenempfänger, kann eine sichere und robuste Übertragung des Ausgangssignals des mindestens einen ersten Dehnungsmessstreifens realisiert werden. Diese Lösung vermeidet auch, dass die Datenübertragungsvorrichtung eine große Fliehkraft erfährt.

In einer besonders bevorzugten Ausführungsvariante der Abtriebseinheit ist vorgesehen, dass die Abtriebseinheit einen zweiten Dehnungsmessstreifen umfasst, der an der Außenumfangsfläche angeordnet ist, wobei der zweite Dehnungsmessstreifen vorzugsweise diametral zu dem ersten Dehnungsmessstreifen angeordnet ist. Durch die Anordnung eines ersten Dehnungsmessstreifens und eines zweiten Dehnungsmessstreifens ist die Realisierung einer Messanordnung möglich, mit der das Ausgangssignal in Richtung der interessierenden Messgröße verstärkt und in andere Richtungen kompensiert werden kann. Durch die gegenüberliegende Anordnung können andere Verformungen als durch Torsion kompensiert werden.

Alternativ können der erste Dehnungsmessstreifen und der zweite Dehnungsmessstreifen unmittelbar aneinander angrenzend angeordnet. Insbesondere ist es bevorzugt, dass die Dehnungsmessstreifen in Umfangsrichtung des Wellenelements benachbart zueinander angeordnet sind und in Umfangsrichtung unmittelbar aneinander angrenzend angeordnet sind. Der erste Dehnungsmessstreifen und der zweite Dehnungsmessstreifen können bei unmittelbarer Anordnung aneinander beispielsweise in sogenannter Fischgrätenform angeordnet sein. Dadurch können verschiedene Drehrichtungen besser aufgenommen werden. Die unmittelbare Anordnung zweier Dehnungsmessstreifen kann auch in einem Streifenelement zusammengefasst sein, besonders um dadurch die genaue Anordnung der benachbarten Dehnungsmessstreifen präzise vorgeben zu können.

Darüber hinaus ist es bevorzugt, dass die Abtriebseinheit einen dritten Dehnungsmessstreifen und vorzugsweise einen vierten Dehnungsmessstreifen umfasst, wobei der dritte Dehnungsmessstreifen in einer Umfangsrichtung des Wellenelements 90° versetzt zu dem ersten Dehnungsmessstreifen und dem zweiten Dehnungsmessstreifen angeordnet ist, und wobei der vierte Dehnungsmessstreifen vorzugsweise diametral zu dem dritten Dehnungsmessstreifen angeordnet ist.

Alternativ vorzugsweise sind jeweils zwei Dehnungsmessstreifen in Umfangsrichtung unmittelbar aneinander angrenzend angeordnet und bilden ein erstes Dehnungsmessstreifenpaket, umfassend den ersten Dehnungsmessstreifen und den zweiten Dehnungsmessstreifen, und ein zweites Dehnungsmessstreifenpaket, umfassend den dritten Dehnungsmessstreifen und den vierten Dehnungsmessstreifen. Vorzugsweise sind das erste Dehnungsmessstreifenpaket und das zweite Dehnungsmessstreifenpaket diametral zueinander angeordnet. Ferner ist es bevorzugt, dass der erste Dehnungsmessstreifen und der zweite Dehnungsmessstreifen und/oder dritte Dehnungsmessstreifen und/oder vierte Dehnungsmessstreifen von dem Antriebsende oder dem Abtriebsende in axialer Richtung die gleiche Beabstandung aufweisen.

Eine weitere besonders bevorzugte Ausführungsvariante der Abtriebseinheit sieht vor, dass das Wellenelement einen ersten Wellenabschnitt mit einem ersten Durchmesser und einen zweiten Wellenabschnitt mit einem zweiten Durchmesser aufweist, wobei der erste Durchmesser eine größere Abmessung aufweist als der zweite Durchmesser, wobei vorzugsweise zwischen dem ersten Wellenabschnitt und dem zweiten Wellenabschnitt ein dritter Wellenabschnitt mit einer in Bezug auf die Drehachse konischen Geometrie angeordnet ist.

Der dritte Wellenabschnitt erstreckt sich vorzugsweise von einem ersten Ende zu einem zweiten Ende, wobei das erste Ende dem ersten Wellenabschnitt und das zweite Ende dem zweiten Wellenabschnitt zugewandt ist. Ferner vorzugsweise weist der dritte Wellenabschnitt an seinem ersten Ende einen Durchmesser auf, der die gleiche Abmessung aufweist, wie der erste Durchmesser. Darüber hinaus ist es bevorzugt, dass der dritte Wellenabschnitt an seinem zweiten Ende einen Durchmesser aufweist, der die gleiche Abmessung aufweist, wie der zweite Durchmesser.

In einer bevorzugten Fortbildung der Abtriebseinheit ist ferner vorgesehen, dass der erste Dehnungsmessstreifen und/oder der zweite Dehnungsmessstreifen und/oder der dritte Dehnungsmessstreifen und/oder der vierte Dehnungsmessstreifen an der Außenumfangsfläche des dritten Wellenabschnitts angeordnet ist bzw. sind. Durch die Anordnung der Dehnungsmessstreifen an dem konischen Abschnitt kann eine weitere Verringerung der Baugröße des Pitchantriebs und/oder des Azimutantriebs, die die Abtriebseinheit zumindest abschnittsweise umfassen, erzielt werden. Insbesondere kann ein Gehäuse mit einer geringen Beabstandung um den ersten Wellenabschnitt angeordnet werden, wobei durch die Durchmesserverringerung am dritten Wellenabschnitt bzw. am zweiten Wellenabschnitt weiterhin ausreichend Bauraum für den oder die Dehnungsmessstreifen und den bzw. die an diesem bzw. diesen angeordneten Messkabel bzw. Messkabeln besteht.

Gemäß einem weiteren Aspekt der vorliegenden Erfindung wird ein Pitchantrieb einer Windenergieanlage, vorgeschlagen, der mindestens einen Pitchmotor, ein Pitchgetriebe mit einer Pitchgetriebeantriebsseite und einer Pitchgetriebeabtriebsseite, und eine Abtriebseinheit nach einer der im Vorherigen genannten Ausführungsvarianten umfasst, wobei der Pitchmotor an der Pitchgetriebeantriebsseite angeordnet ist und die Abtriebseinheit die Pitchgetriebeabtriebsseite ausbildet oder an der Pitchgetriebeabtriebsseite angeordnet ist.

Gemäß einem weiteren Aspekt der vorliegenden Erfindung wird ein Azimutantrieb einer Windenergieanlage vorgeschlagen, der mindestens einen Azimutmotor, ein Azimutgetriebe mit einer Azimutgetriebeantriebsseite und einer Azimutgetriebeabtriebsseite, und eine Abtriebseinheit nach einer der im Vorherigen genannten Ausführungsvarianten umfasst, wobei der Azimutmotor an der Azimutgetriebeantriebsseite angeordnet ist und die Abtriebseinheit die Azimutgetriebeabtriebsseite ausbildet oder an der Azimutgetriebeabtriebsseite angeordnet ist.

Der Pitchantrieb und der Azimutantrieb gemäß den beiden vorstehenden Aspekten haben den besonderen Vorteil, dass diese platzsparend ausgebildet sind. Sie benötigen nämlich durch die Dehnungsmessstreifen keinen zusätzlichen Bauraum. Weder muss die Welle verlängert werden, noch wird Platz beim Betrieb benötigt, wenn nur die Dehnungsmessstreifen auf der Abtriebswelle angeordnet werden und ihre Messkabel zum Abtriebsende herausgeführt werden. Diese Lösung zeichnet sich daher durch eine kompakte Bauweise aus, die dennoch die Zertifizierungsanforderungen gemäß IEC 61400 erfüllen können.

Ferner findet die Messung an der langsam laufenden Abtriebsseite des Pitch- oder Azimutantriebs statt, so dass hier das tatsächlich übertragene Antriebsmoment anliegt und dabei eine besonders exakte Bestimmung des Antriebsmomentes erfolgen kann. Das liegt auch daran, dass an diesem langsamdrehenden Element geringere Störungen durch Schwingungen auftreten, als an einem schnelldrehenden Element vor dem Getriebe.

Gemäß einem weiteren Aspekt der vorliegenden Erfindung wird eine Windenergieanlage vorgeschlagen, die mindestens eine Abtriebseinheit und/oder einen Pitchantrieb und/oder einen Azimutantrieb jeweils gemäß wenigstens einer vorstehend beschriebenen Ausführungsvariante umfasst. In einer solchen Windenergieanlage kann somit auf einfache Art und Weise ein Drehmoment eines Pitchantriebs und/oder Azimutantriebs erfasst werden.

Gemäß einem weiteren Aspekt der vorliegenden Erfindung wird ein Verfahren vorgeschlagen zur Herstellung einer Abtriebseinheit nach einer der vorstehend genannten Ausführungsvarianten, und dieses Verfahren umfasst das Verwenden eines Wellenelementes als Ausgangselement, mit einer Drehachse und einer koaxial zur Drehachse angeordneten Außenumfangsfläche, das sich in axialer Richtung von einem Antriebsende zu einem Abtriebsende erstreckt, zum Übertragen eines Antriebsmomentes zum Abtriebsende, Einbringen eines Kabelkanals, der sich von der Außenumfangsfläche durch das Wellenelement zum Antriebsende oder zum Abtriebsende erstreckt, Anordnen mindestens eines ersten Dehnungsmessstreifens mit einem ersten Messkabel an der Außenumfangsfläche, Hindurchführen des ersten Messkabels durch den Kabelkanal.

Somit kann auf einfache Art und Weise eine Antriebseinheit eines Pitchantriebs bzw. Azimutantriebs hergestellt bzw. modifiziert werden, indem einfach ein Wellenelement eines Pitchantriebs bzw. Azimutantriebs mit Dehnungsmessstreifen versehen wird. Zur Ansteuerung der Dehnungsmessstreifen und/oder zum Weiterleiten von Messsignalen der Dehnungsmessstreifen wird lediglich ein Kabelkanal vorgesehen. Grundsätzlich könnte auch ein Dehnungsmessstreifen reichen, mehrere verbessern aber die Messgenauigkeit. Der Kabelkanal kann bspw. durch eine axiale und einer radiale oder schräge Bohrung hergestellt werden, wenn sich die Bohrungen an der Drehachse treffen. Es wurde erkannt, dass ein solches Wellenelement ein für eine Drehmomentmessung ausreichend repräsentatives Torsionsverhalten aufweist. Es wurde auch erkannt, dass die genannten Bohrungen das Wellenelement nicht merklich schwächen.

Durch die vorgeschlagene Lösung konnte somit ohne großen Aufwand ein Wellenelement bzw. eine Abtriebseinheit oder Abtriebswelle zu einem Drehmomentmessinstrument aufgewertet werden. Dadurch kann nun sogar an dem langsam drehenden Teil gemessen werden, was grundsätzlich problematisch ist, weil hier ein großes Drehmoment übertragen wird. Ein Drehmomentmessinstrument, das an dieser langsam drehenden Welle ein Drehmoment erfasst, muss daher dieses Drehmoment übertragen, was für eine separates Drehmomentmessinstrument aufwändig sein kann. Für die vorgeschlagene Lösung ist das kein Problem.

Gemäß einem weiteren Aspekt der vorliegenden Erfindung wird ein Verfahren zur Kalibrierung einer Abtriebseinheit nach einer der vorstehend genannten Ausführungsvarianten vorgeschlagen und das Verfahren umfasst Bereitstellen eines Pitchgetriebes oder eines Azimutgetriebes mit einer Getriebeantriebsseite, insbesondere einer Pitchgetriebeantriebsseite oder einer Azimutgetriebeantriebsseite, und einer Getriebeabtriebsseite, insbesondere einer Pitchgetriebeabtriebsseite oder einer Azimutgetriebeabtriebsseite, wobei die Abtriebseinheit die Getriebeabtriebsseite ausbildet oder an der Getriebeabtriebsseite angeordnet ist, drehfestes Befestigen der Antriebseinheit im Bereich ihres Abtriebsendes, Beaufschlagen der Getriebeantriebsseite mit einem vorbestimmten Drehmoment, Erfassen eines Ausgangssignals des wenigstens einen ersten Dehnungsmessstreifens, Durchführen des Kalibrierens basierend auf dem Wert des vorgegebenen Drehmomentes und dem Wert des erfassten Ausgangssignal.

Auch durch dieses Kalibrierverfahren wird eine Drehmomentmessung mittels einer der vorstehend beschriebenen Abtriebseinheit ermöglicht. Es braucht nämlich nur eine bestehende Abtriebswelle wie beschrieben modifiziert zu werden, so dass sie in Abhängigkeit eines Drehmomentes Signale durch die Dehnungsmessstreifen abgeben kann. Ist die Abtriebswelle bzw. Abtriebseinheit dann entsprechend vorbereitet, kann durch die vorgeschlagene Kalibrierung ein definierter Zusammenhang zum zu erfassenden Drehmoment hergestellt werden. Danach bildet die modifizierte Abtriebseinheit ein Drehmomentmessinstrument, das genaue Werte liefern kann.

Eine detaillierte Untersuchung oder Vermessung des Wellenelementes ist nicht erforderlich. Es wird zum Kalibrieren einfach ein genau definiertes Drehmoment angelegt und dann die dabei empfangenen Signal kalibriert. Weil das Wellenelement auf die maximal auftretenden Drehmomente ausgelegt ist und diese dauerhaft für seine Lebensdauer übertragen können muss, darf auch von einem linearen Verhalten, zumindest zeitinvarianten Verhalten des Wellenelementes ausgegangen werden, selbst bei den hohen Drehmomenten, die auftreten.

Gemäß einem weiteren Aspekt der vorliegenden Erfindung wird ein Verwenden einer Abtriebseinheit eines Pitchantriebs und/oder eines Azimutantriebs einer Windenergieanlage vorgeschlagen. Diese Verwendung der Antriebseinheit ist vorgesehen zum Erfassen eines Antriebsdrehmomentes, wobei die Abtriebseinheit ein Wellenelement, mit einer Drehachse und einer koaxial zur Drehachse angeordneten Außenumfangsfläche umfasst, das sich in axialer Richtung von einem Antriebsende zu einem Abtriebsende erstreckt, zum Übertragen eines Antriebsmomentes zum Abtriebsende, und ein an dem Abtriebsende koaxial zur Drehachse angeordnetes Ritzel, oder eine Ritzelaufnahme zum drehfesten Aufnehmen eines solchen Ritzels, umfasst, wobei zur Verwendung der Abtriebseinheit zum Erfassen des Antriebsdrehmomentes ein Kabelkanal angeordnet wird, der sich von der Außenumfangsfläche durch das Wellenelement zum Antriebsende oder zum Abtriebsende erstreckt, an der Außenumfangsfläche mindestens ein erster Dehnungsmessstreifen mit mindestens einem ersten Messkabel angeordnet wird, und das wenigstens eine erste Messkabel von dem wenigstens einen ersten Dehnungsmessstreifen durch den Kabelkanal zum Antriebsende oder zum Abtriebsende geführt wird.

Somit wurde auch hier erkannt, dass eine Abtriebseinheit auf einfache Art und Weise als Drehmomentmessinstrument verwendet werden kann.

Gemäß einer Ausführungsform ist vorgesehen, dass sich der Kabelkanal von der Außenumfangsfläche durch das Wellenelement zu einer Stirnstelle am Antriebsende oder am Abtriebsende erstreckt, und die Stirnstelle und/oder eine Öffnung des Kabelkanals im Bereich der Drehachse an dem Wellenelement angeordnet ist. Dadurch kann die Verwendung der Abtriebseinheit besonders vorteilhaft gestaltet werden, indem der Kabelkanal auch auf einfache und zweckmäßige Art und Weise in die Abtriebseinheit eingebracht werden kann, um darüber ein Messkabel von und die Abtriebseinheit damit.

Die Erfindung wird nachfolgend anhand von Ausführungsbeispielen unter Bezugnahme auf die begleitenden Figuren näher erläutert. Es zeigen:
- Fig. 1:: eine Windenergieanlage in einer perspektivischen Darstellung;
- Fig. 2:: eine schematische Seitenansicht eines Generators mit Nabe einer Windenergieanlage;
- Fig. 3:: eine schematische Seitenansicht einer Ausführungsform einer Abtriebseinheit;
- Fig. 4:: eine perspektivische Ansicht einer weiteren Ausführungsform einer Abtriebseinheit;
- Fig. 5:: eine weitere perspektivische Ansicht der in Figur 4 gezeigten Abtriebseinheit beim Einbau in ein Pitchgetriebegehäuse;
- Fig. 6:: eine Detailansicht der Abtriebseinheit der Figur 4;
- Fig. 7:: eine Draufsicht auf eine Aufnahme für einen Pitchantrieb;
- Fig. 8:: einen Ausschnitt einer perspektivischen Innenansicht einer Blattwurzel eines Rotorblattes;
- Fig. 9:: eine schematische Darstellung eines Kalibrieraufbaus;
- Fig. 10:: eine schematische Ansicht einer Ausführungsform einer Dehnungsmessstreifenanordnung;
- Fig. 11:: ein Ersatzschaltbild der Dehnmessstreifen der Figur 10.

In den Figuren sind gleiche oder im Wesentlichen funktionsgleiche oder-ähnliche Elemente mit den gleichen Bezugszeichen bezeichnet.

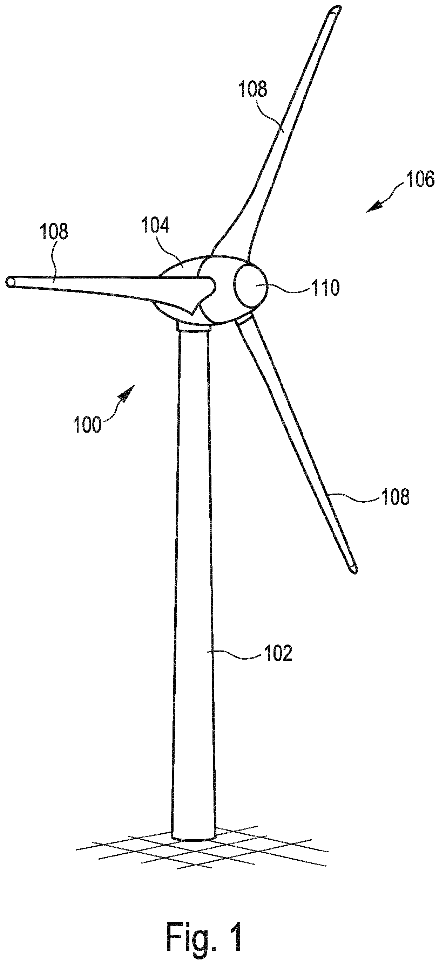

Figur 1 zeigt eine schematische Ansicht einer beispielhaften Ausführungsform einer Windenergieanlage. Figur 1 zeigt eine Windenergieanlage 100 mit einem Turm 102 und einer Gondel 104. An der Gondel 104 ist ein aerodynamischer Rotor 106 mit drei Rotorblättern 108 und einem Spinner 110 vorgesehen. Der aerodynamische Rotor 106 wird im Einbauzustand und/oder im Betriebszustand durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Die Rotorblätter 108 weisen jeweils eine Längsachse auf, welche im Wesentlichen auf eine Drehachse des Rotors 106 gerichtet sind. Die Rotorblätter 108 sind um diese Längsachse drehbar an der Gondel angeordnet. Diese Drehbarbarkeit der Rotorblätter 108 wird durch hier nicht gezeigte Pitchantriebe erreicht.

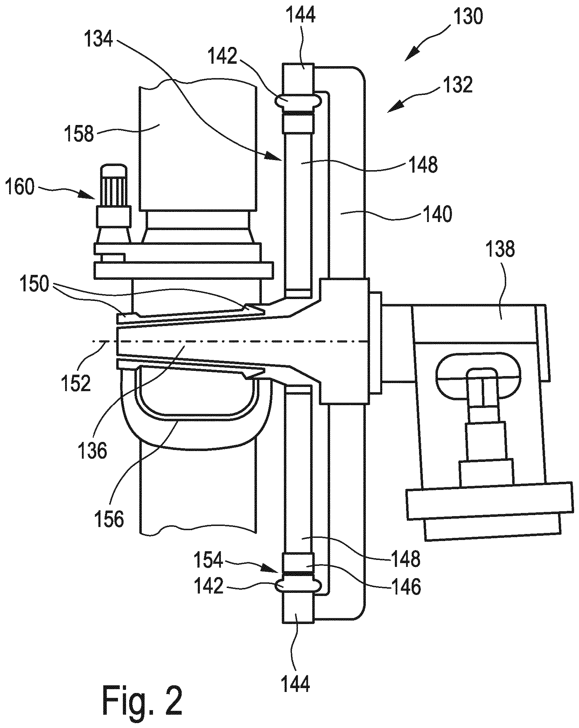

Figur 2 zeigt einen Innenläufergenerator 130 der Windenergieanlage 100 schematisch in einer Seitenansicht. Der Innenläufergenerator 130 weist einen Stator 132 und einen dazu drehbar gelagerten elektrodynamischen Rotor 134 auf und ist mit seinem Stator 132 über einen Achszapfen 136 an einem Maschinenträger 138 befestigt. Der Stator 132 weist einen Statorträger 140 und Statorblechpakete 142 auf, die Statorpole des Generators 130 bilden und über einen Statorring 144 eines Statorträgers 140 befestigt sind. Der elektrodynamische Rotor 134 weist Rotorpolschuhe 146 auf, die die Rotorpole bilden und über einen Rotorträger 148 und Lager 150 auf dem Achszapfen 136 drehbar um die Drehachse 152 gelagert sind. Die Statorblechpakete 142 und Rotorpolschuhe 146 trennt nur ein schmaler Luftspalt 154, der wenige Millimeter dick ist. Die Statorblechpakete 142 und die Rotorpolschuhe 146 bilden jeweils einen Ring und sind zusammen auch ringförmig, so dass der Generator 130 ein Ringgenerator ist. Der Maschinenträger 138 ist in einer Einbausituation um eine im Wesentlichen vertikale Achse drehbar gelagert. Die Rotorblätter 148 sind ebenfalls um ihre Längsachse drehbar gelagert. Bestimmungsgemäß dreht sich der elektrodynamische Rotor 134 des Generators 130 zusammen mit der Rotornabe 156 des aerodynamischen Rotors, von dem Ansätze von Rotorblättern 158 angedeutet sind. Die Rotorblätter 158 können jeweils mittels eines Pitchantriebs 160, der dazu eine hier nicht gezeigte Abtriebseinheit aufweist, um ihre Längsachse gedreht werden.

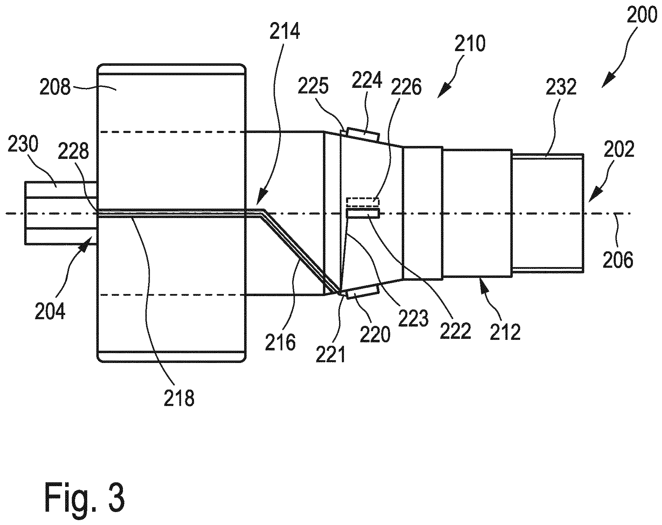

Figur 3 zeigt eine schematische Seitenansicht einer Ausführungsform einer Abtriebseinheit. Die Abtriebseinheit 200 umfasst ein Wellenelement 210 und ein Ritzel 208. Das Wellenelement 210 erstreckt sich von einem Antriebsende 202 zu einem Abtriebsende 204. Das Wellenelement 210 ist ferner rotationssymmetrisch um eine Drehachse 206 ausgebildet, wobei die Drehachse 206 parallel zu der axialen Erstreckung des Wellenelements 210 zwischen dem Antriebsende und dem Abtriebsende 204 ausgerichtet ist. Das Ritzel 208 ist ebenfalls rotationssymmetrisch um die Drehachse 206 ausgebildet. Das Ritzel 208 ist an einem Abschnitt des Wellenelements 210 angeordnet, der an das Abtriebsende 204 angrenzt. Das Ritzel 208 kann auf das Wellenelement 210 aufgesetzt sein, oder das Ritzel 208 kann mit dem Wellenelement 210 einstückig ausgebildet sein. Stirnseitig bilden das Wellenelement 210 und das Ritzel 208 am Abtriebsende 204 eine im Wesentlichen ebene Fläche aus, die senkrecht zur Drehachse 206 ausgerichtet ist.

Das Wellenelement 210 weist eine Außenumfangsfläche 212 auf, die koaxial zur Drehachse 206 angeordnet ist. Die Außendurchmesser des Wellenelements 210 variieren mit ihrer axialen Position. Ferner sind auf dem Wellenelement 210 ein erster Dehnungsmessstreifen 220 mit einem ersten Messkabel 221, ein zweiter Dehnungsmessstreifen 222 mit einem zweiten Messkabel 223, ein dritter Dehnungsmessstreifen 224 mit einem dritten Messkabel 225 und ein vierter Dehnungsmessstreifen 226 mit einem vierten Messkabel angeordnet, wobei das vierte Messkabel nicht abgebildet ist. Der vierte Dehnungsmessstreifen 226 ist in der Figur 3 lediglich gestrichelt dargestellt, da dieser auf der nicht gezeigten Rückseite des Wellenelements 210 angeordnet ist. Der erste Dehnungsmessstreifen 220 und der dritte Dehnungsmessstreifen 224 sind diametral zueinander angeordnet. D.h., dass ein 180° Winkel in Bezug auf die Drehachse zwischen diesen liegt. Der zweite Dehnungsmessstreifen 222 ist in einem 90° Abstand in Außenumfangsrichtung des Wellenelements 210 zu dem ersten Dehnungsmessstreifen 220 sowie zu dem dritten Dehnungsmessstreifen 224 angeordnet. Der vierte Dehnungsmessstreifen 226 ist diametral zu dem zweiten Dehnungsmessstreifen 222 angeordnet.

Ein Kabelkanal 214 erstreckt sich von der Außenumfangsfläche 212 durch das Wellenelement 210 zum Abtriebsende 204. Der Kabelkanal 214 weist einen ersten Kabelkanalabschnitt 216 und zweiten Kabelkanalabschnitt 218 auf. Der zweite Kabelkanalabschnitt 218 erstreckt sich koaxial zur Drehachse 206 ausgehend von dem Abtriebsende 204 durch das Wellenelement 210. Der zweite Kabelkanalabschnitt endet in axialer Richtung zwischen dem Abtriebsende 204 und den Dehnungsmessstreifen 220, 222, 224, 226. Der erste Kabelkanalabschnitt 216 erstreckt sich von der Außenumfangsfläche 212 in radialer und in axialer Richtung, also schräg, in Richtung der Drehachse 206 und trifft an der Drehachse 206 auf den zweiten Kabelkanalabschnitt 218. Die Kabelkanalrichtung des ersten Kabelkanalabschnitts 216 ist in etwa 45° zu der Drehachse 206 gewinkelt.

Die Messkabel 221, 223, 225 der Dehnungsmessstreifen 220, 222, 224 verlaufen durch den Kabelkanal 214 von der Außenumfangsfläche 212 zu der an dem Abtriebsende 204 angeordneten Stirnstelle 228. Die Messkabel 221, 223, 225 verlaufen mit einem ersten Abschnitt von ihrem jeweiligen Dehnungsmessstreifen zu der Eingangsöffnung des Kabelkanals 214 an der Außenumfangsfläche 212. An dem Abtriebsende 204 ist ferner koaxial zur Drehachse 206 ein Schleifringübertrager 230 angeordnet. Der Schleifringübertrager weist einen mit der Abtriebseinheit rotierenden Innenteil und einen in der Regel nicht rotierenden Außenteil auf. Die Messkabel 221, 223, 225 sind mit dem rotierenden Innenteil des Schleifringübertragers 230 verbunden. Mittels des Schleifringübertragers 230 können Ausgangssignale der Dehnungsmessstreifen 220, 222, 224, 226 zu einer nicht rotierenden Einheit außerhalb der Abtriebseinheit 200 übertragen werden. Die Abtriebseinheit 200 weist ferner angrenzend an das Antriebsende 202 eine Verzahnung 232 auf, welche dazu angeordnet und ausgebildet ist, ein Antriebsdrehmoment auf die Abtriebseinheit zu übertragen.

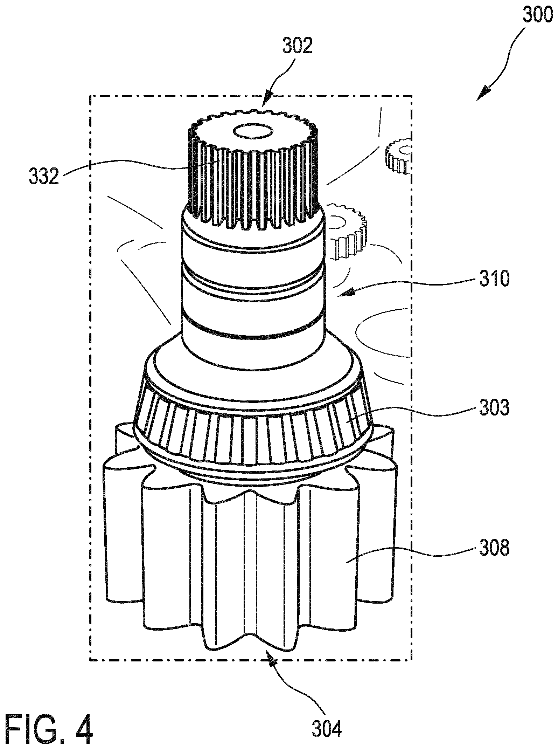

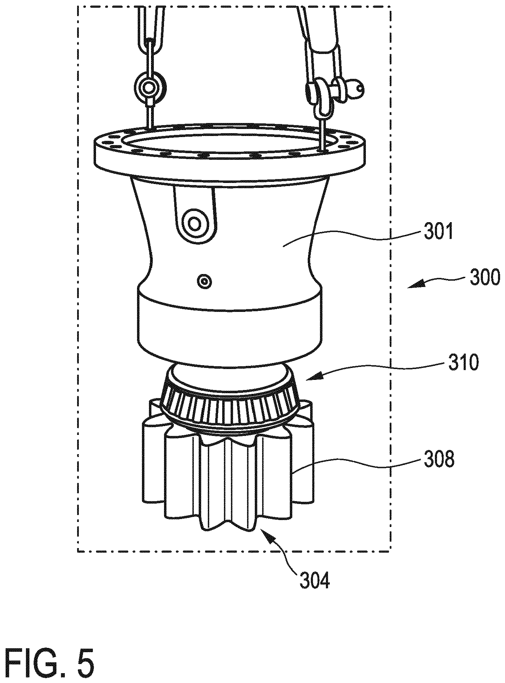

Figur 4 zeigt eine perspektivische Ansicht einer weiteren Ausführungsform einer Abtriebseinheit 300. Das Wellenelement 310 erstreckt sich vom Abtriebsende 304 zum Antriebsende 302. In einem Bereich angrenzend an das Abtriebsende 304 ist ein Ritzel 308 koaxial an dem Wellenelement 310 angeordnet, und am Antriebsende eine Verzahnung, zum Aufnehmen eines Antriebsmomentes. Auf dem Wellenelement 310 ist ferner ein Lager 303 angeordnet. In Figur 5 ist die in Figur 4 gezeigte Abtriebseinheit 300 im teilweise eingebauten Zustand gezeigt, in dem diese in einem abtriebsseitigen Abschnitt eines Pitchgetriebegehäuses 301 angeordnet ist.

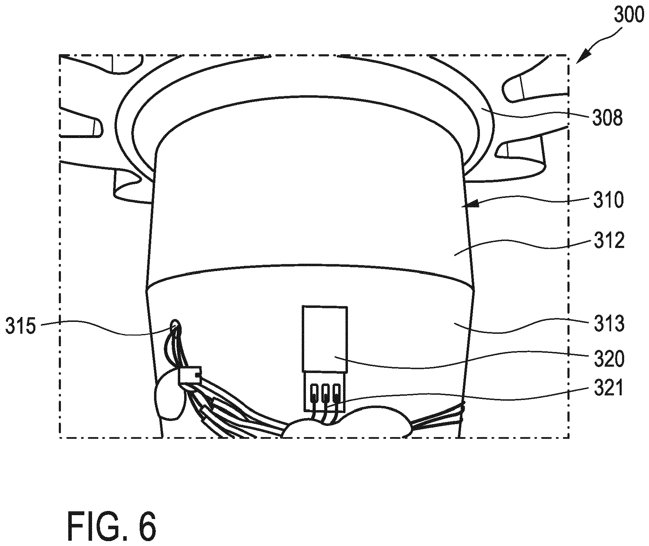

In Figur 6 ist die in Figur 4 gezeigte Abtriebseinheit 300 im Detail gezeigt, wobei insbesondere eine Detailansicht der Anordnung des Dehnungsmessstreifen 320, dem ersten Messkabel 321 sowie dem Eingang zu dem Kabelkanal 315 gezeigt ist. Das Wellenelement 310 weist einen ersten Wellenabschnitt 312 und einen zweiten Wellenabschnitt 313 auf. Der erste Wellenabschnitt 312 weist eine zylindrische Geometrie auf. Der zweite Wellenabschnitt 313 weist eine konische Geometrie auf. Der erste Dehnungsmessstreifen 320 ist an dem zweiten, konischen Wellenabschnitt 313 angeordnet.

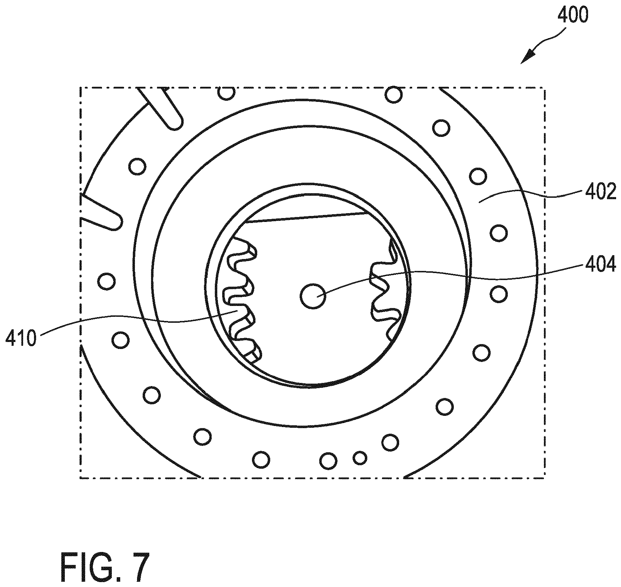

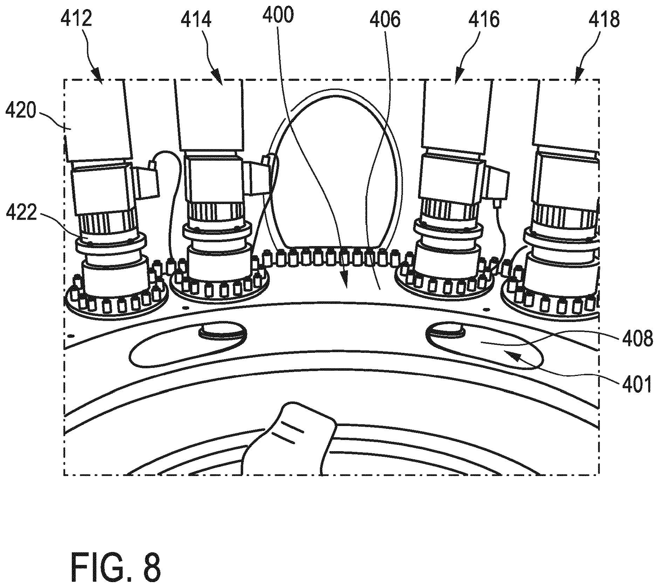

Figur 7 zeigt eine schematische Draufsicht auf eine Pitchaufnahme 400 in einer Blattwurzel für einen Pitchantrieb, in den ein Pitchantrieb einbaubar ist. Insbesondere ist hier ersichtlich, dass ein Pitchgetriebe an einem Pitchantriebsflansch 402 angesetzt und befestig werden kann. Der Pitchantriebsflansch 402 ist Teil der Pitchaufnahme 400, die im Bereich einer Blattwurzel angeordnet ist. Die Pitchaufnahme 400 ist insbesondere in Figur 8 besser zu erkennen. Darüber hinaus ist in Figur 7 ein kleiner Ausschnitt eines Rotorblattzahnkranzes 410 zu erkennen. In diesem Rotorblattzahnkranz 410 kann das Ritzel 208, 308 einer vorstehend gezeigten Abtriebseinheit 200, 300 eingreifen. Ferner weist die Pitchaufnahme 400 eine Durchgangsbohrung 404 auf, in der ein Schleifringübertrager angeordnet werden kann.

Figur 8 zeigt eine Innenansicht einer Blattwurzel eines Rotorblattes. In der als Hohlkörper ausgebildeten Pitchaufnahme 400 sind ein erster Pitchantrieb 412, ein zweiter Pitchantrieb 414, ein dritter Pitchantrieb 416 und ein vierter Pitchantrieb 418 aufgenommen. Die ringförmige Pitchaufnahme 400 weist einen Aufnahmehohlraum 401 auf. Der Aufnahmehohlraum 401 wird insbesondere durch das ringförmig ausgebildete erste Aufnahmeelement 406 und das ähnlich ausgebildete zweite Aufnahmeelement 408 gebildet, die axial voneinander beabstandet sind.

Diese ringförmigen Aufnahmeelemente 406, 408 weisen vorzugsweise axial ausgerichtete Durchgangsöffnungen auf, in denen die Pitchantriebe 412, 414, 416, 418 angeordnet sind. Anhand des ersten Pitchantriebs 412 wird im Folgenden die Anordnung einer vorgeschlagenen Abtriebseinheit 200, 300 erläutert. An einem dem Ritzel abgewandten Ende des Pitchantriebs 412 ist ein Motor 420 angeordnet. Vom Motor aus in Richtung des nicht dargestellten Ritzels ist ein Getriebe 422 angeordnet. Auf der Seite des Getriebes 422, die dem Motor 420 abgewandt ist, ist eine erfindungsgemäße Abtriebseinheit gemäß Figur 3 oder Figur 4 angeordnet. Die Abtriebseinheit bildet die Abtriebsseite des Getriebes 422 aus oder ist an der Abtriebsseite des Getriebes 422 angeordnet.

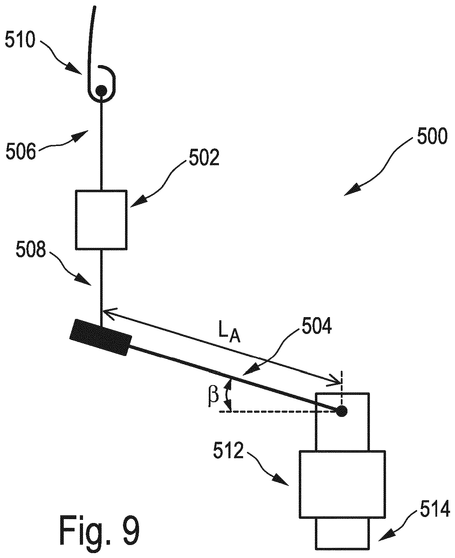

Figur 9 zeigt schematisch einen Kalibrieraufbau. Der Kalibrieraufbau 500 umfasst ein Pitchgetriebe 512 mit einer nicht vollständig gezeigten Abtriebseinheit mit einem Abtriebsritzel 514, wobei an dem Pitchgetriebe 512 eine Drehmomentvorrichtung 504 angeordnet ist. Die Drehmomentvorrichtung 504 kann mit einer definierten Kraft über eine Aufhängevorrichtung 510, eine Kraftmessdose 502 sowie Zuglaschen 506, 508 beaufschlagt werden. Mittels einer definierten Beaufschlagung des Pitchgetriebes 512 mit einem Drehmoment, können die nicht gezeigten Dehnungsmessstreifen der Abtriebseinheit kalibriert werden.

Insbesondere ist hier das Ziel, einen Zusammenhang zwischen einem Ausgangssignal der Dehnungsmessstreifen und dem Drehmoment zu erhalten. Bei dieser Kalibrierung wird ein definiertes Drehmoment vorgegeben und das Ausgangssignal der Dehnungsmessstreifen wird gemessen. Im späteren tatsächlichen Einsatz ist diese Logik umgekehrt, so dass dann ein definiertes Ausgangssignal der Dehnungsmessstreifen ermittelt wird und auf Basis dieser Ausgangssignale dann wiederum auf das Drehmoment, das von der Abtriebseinheit übertragen wird, geschlossen werden kann.

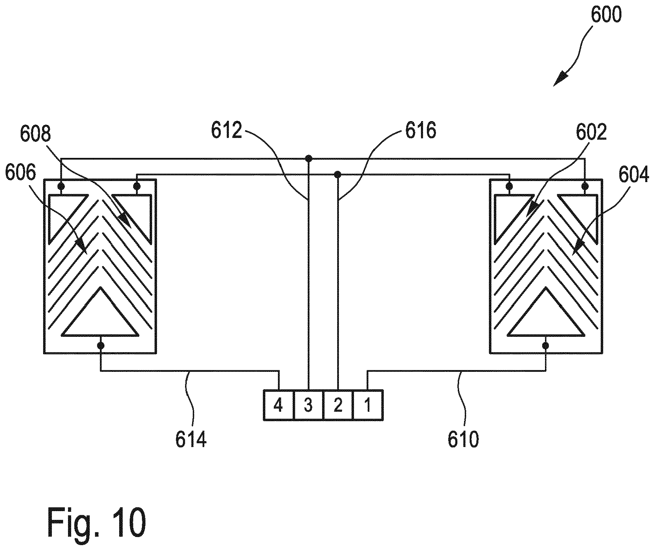

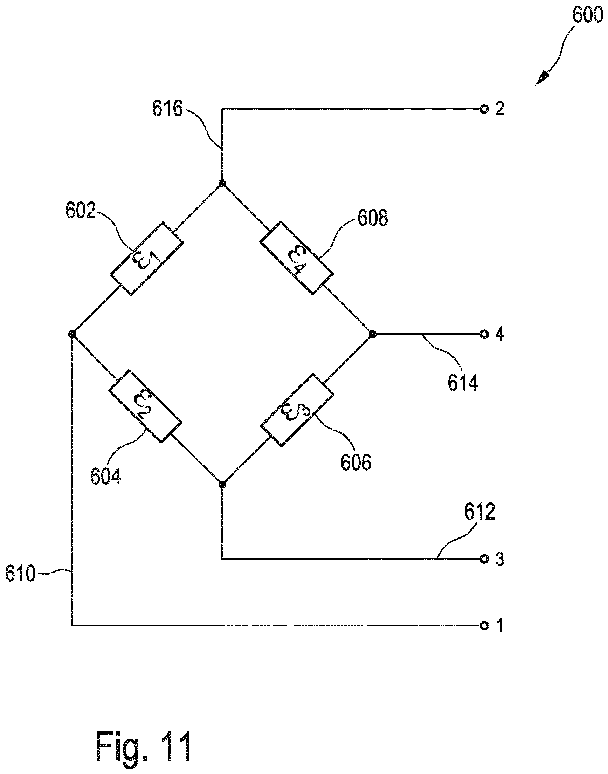

Die Figuren 10 und 11 zeigen eine Dehnungsmessstreifenanordnung 600. Der erste Dehnungsmessstreifen 602 und der zweite Dehnungsmessstreifen 604 sind zur Kompensation von Querkräften als eine erste Messanordnung in sogenannter Fischgrätenform angeordnet. Der dritte Dehnungsmessstreifen 606 und der vierte Dehnungsmessstreifen 608 sind entsprechend als eine zweite Messanordnung in Fischgrätenform angeordnet. Die Dehnungsmessstreifen 602, 604, 606, 608 bilden durch die ebenfalls gezeigte Verschaltung mit den Anschlusskabeln 610, 612, 614, 616 eine vollständige Messanordnung.

Der erste Dehnungsmessstreifen 602 und der zweite Dehnungsmessstreifen 604 sind mit einem ersten Ende jeweils mit dem ersten Anschlusskabel 610 elektrisch verbunden, wobei das erste Anschlusskabel 610 eine Geberversorgung bereitstellt. Analog sind der dritte Dehnungsmessstreifen 606 und der vierte Dehnungsmessstreifen 608 mit einem ersten Ende jeweils mit dem zweiten Anschlusskabel 614 elektrisch verbunden, wobei das zweite Anschlusskabel 614 ebenfalls eine Geberversorgung bereitstellt.

An dem dem ersten Ende gegenüberliegenden zweiten Ende des zweiten Dehnungsmessstreifens 604 und an dem dem ersten Ende gegenüberliegenden zweiten Ende des dritten Dehnungsmessstreifens 606 ist ein drittes Anschlusskabel 612 angeschlossen. An dem dem ersten Ende gegenüberliegenden zweiten Ende des ersten Dehnungsmessstreifen 602 und an dem dem ersten Ende gegenüberliegenden zweiten Ende des viertes Dehnungsmessstreifens 608 ist ein viertes Anschlusskabel 616 angeschlossen. Das dritte und vierte Anschlusskabel 612, 616 können beispielsweise zur Signalverstärkung an einen Verstärker angeschlossen sein.

### Bezugszeichen

- 100: Windenergieanlage
- 102: Turm
- 104: Gondel
- 106: Rotor
- 108, 158: Rotorblatt
- 110: Spinner
- 130: Innenläufergenerator
- 132: Stator
- 134: elektrodynamischer Rotor
- 136: Achszapfen
- 138: Maschinenträger
- 140: Statorträger
- 142: Statorblechpakete
- 144: Statorring
- 146: Rotorpolschuhe
- 148: Rotorträger
- 150: Rotorlager
- 152,206: Drehachse
- 154: Luftspalt
- 156: Rotornabe
- 160: Pitchantrieb
- 200, 300: Abtriebseinheit
- 202, 302: Antriebsende
- 204, 304: Abtriebsende
- 208, 308: Ritzel
- 210, 310: Wellenelement
- 212: Außenumfangsfläche Wellenelement
- 214: Kabelkanal
- 216: erster Kabelkanalabschnitt
- 218: zweiter Kabelkanalabschnitt
- 220, 320, 602: erster Dehnungsmessstreifen
- 221, 321: erstes Messkabel
- 222, 604: zweiter Dehnungsmessstreifen
- 223: zweites Messkabel
- 224, 606: dritter Dehnungsmessstreifen
- 225: drittes Messkabel
- 226, 608: vierter Dehnungsmessstreifen
- 228: Stirnstelle
- 230: Schleifringübertrager
- 232, 332: Verzahnung
- 301: Abtriebsseitiger Abschnitt eines Pitchgetriebegehäuse
- 303: Lager
- 312: erster Wellenabschnitt
- 313: zweiter Wellenabschnitt
- 315: Eingang Kabelkanal
- 400: Pitchaufnahme
- 401: Aufnahmehohlraum
- 402: Pitchantriebsflansch
- 404: Durchgangsbohrung
- 406: erstes Aufnahmeelement
- 408: zweites Aufnahmeelement
- 410: Rotorblattzahnkranz
- 412: erster Pitchantrieb
- 414: zweiter Pitchantrieb
- 416: dritter Pitchantrieb
- 418: vierter Pitchantrieb
- 420: Motor
- 422: Getriebe
- 500: Kalibrieraufbau
- 502: Kraftmessdose
- 504: Drehmomentvorrichtung
- 506: erste Zuglasche
- 508: zweite Zuglasche
- 510: Aufhängevorrichtung
- 512: Pitchgetriebe
- 514: Abtriebsritzel
- 600: Dehnungsmessstreifenanordnung
- 610: erstes Anschlusskabel
- 612: drittes Anschlusskabel
- 614: zweites Anschlusskabel
- 616: viertes Anschlusskabel

## Patentansprüche

1. Abtriebseinheit (200, 300) eines Pitchantriebs (160) oder eines Azimutantriebs einer Windenergieanlage (100), umfassend
- ein Wellenelement (210, 310), mit einer Drehachse (206) und einer koaxial zur Drehachse angeordneten Außenumfangsfläche (212), das sich in axialer Richtung von einem Antriebsende (202, 302) zu einem Abtriebsende (204, 304) erstreckt, zum Übertragen eines Antriebsmomentes zum Abtriebsende,
- ein an dem Abtriebsende koaxial zur Drehachse angeordnetes Ritzel (208, 308), oder eine Ritzelaufnahme zum drehfesten Aufnehmen eines solchen Ritzels,
- wobei sich ein Kabelkanal (214) von der Außenumfangsfläche durch das Wellenelement zum Antriebsende oder zum Abtriebsende erstreckt,
- wobei an der Außenumfangsfläche mindestens ein erster Dehnungsmessstreifen (220, 320, 602) mit mindestens einem ersten Messkabel (221, 321) angeordnet ist,
- wobei sich das wenigstens eine erste Messkabel von dem wenigstens einen ersten Dehnungsmessstreifen durch den Kabelkanal zum Antriebsende oder zum Abtriebsende erstreckt.

2. Abtriebseinheit (200, 300) nach dem vorhergehenden Anspruch, wobei sich der Kabelkanal (214) von der Außenumfangsfläche (212) durch das Wellenelement (210, 310) zu einer Stirnstelle (228) am Antriebsende (202, 302) oder am Abtriebsende (204, 304) erstreckt, und die Stirnstelle oder eine Öffnung (315) des Kabelkanals im Bereich der Drehachse (206) an dem Wellenelement (210, 310) angeordnet ist.

3. Abtriebseinheit (200, 300) nach einem der vorhergehenden Ansprüche, wobei an der Stirnstelle (228) eine Datenübertragungsvorrichtung (230) angeordnet ist, und die Datenübertragungsvorrichtung mittels des ersten Messkabels (221, 321) mit dem mindestens einen ersten Dehnungsmessstreifen (220, 320, 602) gekoppelt ist und die Datenübertragungsvorrichtung zur elektrischen Datenübertragung von der Abtriebseinheit (200, 300) zu einem Datenempfänger ausgebildet ist. und wobei die Datenübertragungsvorrichtung vorzugsweise ein Schleifringübertrager aufweist, zur elektrischen Datenübertragung von einem drehenden zu einem stehenden Teil.

4. Abtriebseinheit (200, 300) nach einem der vorhergehenden Ansprüche, umfassend einen zweiten Dehnungsmessstreifen (222, 604), der an der Außenumfangsfläche (212) angeordnet ist., wobei der zweite Dehnungsmessstreifen diametral zu dem ersten Dehnungsmessstreifen (220, 320, 602) angeordnet ist.

5. Abtriebseinheit (200, 300) nach einem der vorhergehenden Ansprüche, umfassend einen dritten Dehnungsmessstreifen (224, 606) und einen vierten Dehnungsmessstreifen (226, 608), wobei der dritte Dehnungsmessstreifen in einer Umfangsrichtung des Wellenelements (210, 310) um 90 Bogengrad versetzt zu dem ersten Dehnungsmessstreifen (220, 320, 602) und dem zweiten Dehnungsmessstreifen (222, 604) angeordnet ist, und wobei der vierte Dehnungsmessstreifen diametral zu dem dritten Dehnungsmessstreifen angeordnet ist.

6. Abtriebseinheit (200, 300) nach einem der vorhergehenden Ansprüche, wobei das Wellenelement (210, 310) einen ersten Wellenabschnitt mit einem ersten Durchmesser und einen zweiten Wellenabschnitt mit einem zweiten Durchmesser aufweist, wobei der erste Durchmesser eine größere Abmessung aufweist als der zweite Durchmesser, wobei vorzugsweise zwischen dem ersten Wellenabschnitt und dem zweiten Wellenabschnitt ein dritter Wellenabschnitt mit einer in Bezug auf die Drehachse (206) konischen Geometrie angeordnet ist.

7. Abtriebseinheit (200, 300) nach einem der vorhergehenden Ansprüche, wobei wenigstens ein Dehnungsmessstreifen
- des ersten Dehnungsmessstreifens (220, 320, 602),
- des zweiten Dehnungsmessstreifens (222, 604),
- des dritten Dehnungsmessstreifens (224, 606) und
- des vierten Dehnungsmessstreifens (226, 608)
an einer bzw. der Außenumfangsfläche (212) eines bzw. des dritten Wellenabschnitts angeordnet ist.

8. Pitchantrieb (160) einer Windenergieanlage (100), umfassend mindestens einen Pitchmotor (420), ein Pitchgetriebe (422) mit einer Pitchgetriebeantriebsseite und einer Pitchgetriebeabtriebsseite, und eine Abtriebseinheit (200, 300) nach einem der Ansprüche 1 bis 7, wobei der Pitchmotor an der Pitchgetriebeantriebsseite angeordnet ist und die Abtriebseinheit (200, 300) die Pitchgetriebeabtriebsseite ausbildet oder an der Pitchgetriebeabtriebsseite angeordnet ist.

9. Azimutantrieb einer Windenergieanlage (100), umfassend mindestens einen Azimutmotor, ein Azimutgetliebe mit einer Azimutgetriebeantriebsseite und einer Azimutgetriebeabtriebsseite, und eine Abtriebseinheit (200, 300) nach einem der Ansprüche 1 bis 7, wobei der Azimutmotor an der Azimutgetriebeantriebsseite angeordnet ist und die Abtriebseinheit (200, 300) die Azimutgetriebeabtriebsseite ausbildet oder an der Azimutgetriebeabtriebsseite angeordnet ist.

10. Windenergieanlage (100), umfassend wenigstens ein Element aus der Liste aufweisend
- eine Abtriebseinheit (200, 300) nach einem der Ansprüche 1 bis 7,
- einen Pitchantrieb (160) nach Anspruch 8, und
- einen Azimutantrieb nach Anspruch 9.

11. Verfahren zur Herstellung einer Abtriebseinheit (200, 300) nach einem der Ansprüche 1 bis 7, umfassend
- Verwenden als Ausgangselement ein Wellenelement (210, 310), mit einer Drehachse (206) und einer koaxial zur Drehachse angeordneten Außenumfangsfläche (212), das sich in axialer Richtung von einem Antriebsende (202, 302) zu einem Abtriebsende (204, 304) erstreckt, zum Übertragen eines Antriebsmomentes zum Abtriebsende,
- Einbringen eines Kabelkanals (214), der sich von der Außenumfangsfläche durch das Wellenelement zum Antriebsende (202, 302) oder zum Abtriebsende erstreckt,
- Anordnen mindestens eines ersten Dehnungsmessstreifens (220, 320, 602) mit einem ersten Messkabel an der Außenumfangsfläche,
- Hindurchführen des ersten Messkabels durch den Kabelkanal.

12. Verfahren zur Kalibrierung einer Abtriebseinheit (200, 300) nach einem der Ansprüche 1 bis 7, umfassend
- Bereitstellen eines Pitchgetriebes oder eines Azimutgetriebes mit einer Getriebeantriebsseiteund einer Getriebeabtriebsseite, , wobei die Abtriebseinheit (200, 300) die Getriebeabtriebsseite ausbildet oder an der Getriebeabtriebsseite angeordnet ist,
- Drehfestes Befestigen der Abtriebseinheit im Bereich ihres Abtriebsendes (202, 302),
- Beaufschlagen der Getriebeantriebsseite mit einem vorbestimmten Drehmoment,
- Erfassen eines Ausgangssignals des wenigstens einen ersten Dehnungsmessstreifens (220, 320, 602),
- Durchführen des Kalibrierens basierend auf dem Wert des vorgegebenen Drehmomentes und dem Wert des erfassten Ausgangssignals.

13. Verwenden einer Abtriebseinheit (200, 300) eines Pitchantriebs (160) oder eines Azimutantriebs einer Windenergieanlage (100) nach einem der Ansprüche 1 bis 7, zum Erfassen eines Antriebsdrehmomentes, wobei die Abtriebseinheit (200, 300)
- ein Wellenelement (210, 310), mit einer Drehachse (206) und einer koaxial zur Drehachse angeordneten Außenumfangsfläche (212) umfasst, das sich in axialer Richtung von einem Antriebsende (202, 302) zu einem Abtriebsende (204, 304) erstreckt, zum Übertragen eines Antriebsmomentes zum Abtriebsende, und
- ein an dem Abtriebsende koaxial zur Drehachse angeordnetes Ritzel (208, 308), oder eine Ritzelaufnahme zum drehfesten Aufnehmen eines solchen Ritzels, umfasst,
- wobei zur Verwendung der Abtriebseinheit (200, 300) zum Erfassen des Antriebsdrehmomentes ein Kabelkanal (214) angeordnet wird, der sich von der Außenumfangsfläche durch das Wellenelement zum Antriebsende (202, 302) oder zum Abtriebsende erstreckt,
- an der Außenumfangsfläche mindestens ein erster Dehnungsmessstreifen (220, 320, 602) mit mindestens einem ersten Messkabel (221, 321) angeordnet wird, und
- das wenigstens eine erste Messkabel (221, 321) von dem wenigstens einen ersten Dehnungsmessstreifen durch den Kabelkanal zum Antriebsende (202, 302) oder zum Abtriebsende geführt wird.

14. Verwenden einer Abtriebseinheit (200, 300) nach dem vorhergehenden Anspruch 13, wobei sich der Kabelkanal (214) von der Außenumfangsfläche (212) durch das Wellenelement (210, 310) zu einer Stirnstelle (228) am Antriebsende (202, 302) oder am Abtriebsende (204, 304) erstreckt, und die Stirnstelle oder eine Öffnung (315) des Kabelkanals im Bereich der Drehachse (206) an dem Wellenelement (210, 310) angeordnet ist.

## Claims

1. Output unit (200, 300) of a pitch drive (160) or an azimuth drive of a wind turbine (100), comprising
- a shaft element (210, 310) which has a rotation axis (206) and an outer circumferential face (212) arranged coaxially relative to the rotation axis and which extends in an axial direction from a drive end (202, 302) to an output end (204, 304) for transmitting a drive torque to the output end,
- a pinion (208, 308) which is arranged at the output end coaxially relative to the rotation axis or a pinion receiving member for receiving such a pinion in a rotationally secure manner,
- wherein a cable channel (214) extends from the outer circumferential face through the shaft element to the drive end or to the output end,
- wherein at least one first strain gauge (220, 230, 602) having at least one first measurement cable (221, 321) is arranged on the outer circumferential face,
- wherein the at least one first measurement cable extends from the at least one first strain gauge through the cable channel to the drive end or to the output end.

2. Output unit (200, 300) according to the preceding claim, wherein the cable channel (214) extends from the outer circumferential face (212) through the shaft element (210, 310) to an end location (228) at the drive end (202, 302) or at the output end (204, 304), and the end location or an opening (315) of the cable channel is arranged in the region of the rotation axis (206) on the shaft element (210, 310).

3. Output unit (200, 300) according to either of the preceding claims, wherein a data transmission apparatus (230) is arranged at the end location (228), and the data transmission apparatus is coupled by means of the first measurement cable (221, 321) to the at least one first strain gauge (220, 320, 602) and the data transmission apparatus is constructed for electrical data transmission from the output unit (200, 300) to a data receiver, and wherein the data transmission apparatus preferably has a slip ring transmitter for electrical data transmission from a rotating portion to a fixed portion.

4. Output unit (200, 300) according to any one of the preceding claims, comprising a second strain gauge (222, 604) which is arranged on the outer circumferential face (212), wherein the second strain gauge is arranged diametrically relative to the first strain gauge (220, 320, 602).

5. Output unit (200, 300) according to any one of the preceding claims, comprising a third strain gauge (224, 606) and a fourth strain gauge (226, 608), wherein the third strain gauge is arranged in a circumferential direction of the shaft element (210, 310) offset through 90 degrees relative to the first strain gauge (220, 320, 602) and the second strain gauge (222, 604), and wherein the fourth strain gauge is arranged diametrically relative to the third strain gauge.

6. Output unit (200, 300) according to any one of the preceding claims, wherein the shaft element (210, 310) has a first shaft portion having a first diameter and a second shaft portion having a second diameter, wherein the first diameter has a greater dimension than the second diameter, wherein a third shaft portion having a geometry which is conical with respect to the rotation axis (206) is preferably arranged between the first shaft portion and the second shaft portion.

7. Output unit (200, 300) according to any one of the preceding claims, wherein at least one strain gauge
- of the first strain gauge (220, 320, 602),
- of the second strain gauge (222, 604),
- of the third strain gauge (224, 606) and
- of the fourth strain gauge (226, 608)
is arranged on a or the outer circumferential face (212) of a or the third shaft portion.

8. Pitch drive (160) of a wind turbine (100), comprising at least one pitch motor (420), a pitch gear mechanism (422) having a pitch gear mechanism drive side and a pitch gear mechanism output side, and an output unit (200, 300) according to any one of claims 1 to 7, wherein the pitch motor is arranged at the pitch gear mechanism drive side and the output unit (200, 300) forms the pitch gear mechanism output side or is arranged at the pitch gear mechanism output side.

9. Azimuth drive of a wind turbine (100) comprising at least one azimuth motor, an azimuth gear mechanism having an azimuth gear mechanism drive side and an azimuth gear mechanism output side, and an output unit (200, 300) according to any one of claims 1 to 7, wherein the azimuth motor is arranged at the azimuth gear mechanism drive side and the output unit (200, 300) forms the azimuth gear mechanism output side or is arranged at the azimuth gear mechanism output side.

10. Wind turbine (100) comprising
at least one element from the list having
- an output unit (200, 300) according to any one of claims 1 to 7,
- a pitch drive (160)according to claim 8, and
- an azimuth drive according to claim 9.

11. Method for producing an output unit (200, 300) according to any one of claims 1 to 7, involving
- using as an output element a shaft element (210, 310) having a rotation axis (206) and an outer circumferential face (212) which is arranged coaxially relative to the rotation axis and which extends in an axial direction from a drive end (202, 302) to an output end (204, 304) for transmitting a drive torque to the output end,
- introducing a cable channel (214) which extends from the outer circumferential face through the shaft element to the drive end (202, 302) or to the output end,
- arranging at least one first strain gauge (220, 320, 602) having a first measurement cable on the outer circumferential face,
- guiding the first measurement cable through the cable channel.

12. Method for calibrating an output unit (200, 300) according to any one of claims 1 to 7, involving
- providing a pitch gear mechanism or an azimuth gear mechanism having a gear mechanism drive side and a gear mechanism output side, wherein the output unit (200, 300) forms the gear mechanism output side or is arranged at the gear mechanism output side,
- securing the output unit in the region of the output end (202, 302) thereof in a rotationally secure manner,
- acting on the gear mechanism drive side with a predetermined torque,
- detecting an output signal of the at least one first strain gauge (220, 320, 602),
- carrying out the calibration based on the value of the predetermined torque and the value of the detected output signal.

13. Use of an output unit (200, 300) of a pitch drive (160) or an azimuth drive of a wind turbine (100) according to any one of claims 1 to 7 for detecting a drive torque, wherein the output unit (200, 300)
- comprises a shaft element (210, 310) which has a rotation axis (206) and an outer circumferential face (212) arranged coaxially relative to the rotation axis and which extends in an axial direction from a drive end (202, 302) to an output end (204, 304) for transmitting a drive torque to the output end, and
- comprises a pinion (208, 308) which is arranged at the output end coaxially relative to the rotation axis or a pinion receiving member for receiving such a pinion in a rotationally secure manner,
- wherein, in order to use the output unit (200, 300) for detecting the drive torque, there is arranged a cable channel (214) which extends from the outer circumferential face through the shaft element to the drive end (202, 302) or to the output end,
- at least one first strain gauge (220, 320, 602) having at least one first measurement cable (221, 321) is arranged on the outer circumferential face, and
- the at least one first measurement cable (221, 321) is guided from the at least one first strain gauge through the cable channel to the drive end (202, 302) or to the output end.

14. Use of an output unit (200, 300) according to the preceding claim 13, wherein the cable channel (214) extends from the outer circumferential face (212) through the shaft element (210, 310) to an end location (228) at the drive end (202, 302) or at the output end (204, 304) and the end location or an opening (315) of the cable channel is arranged in the region of the rotation axis (206) on the shaft element (210, 310).

## Revendications

1. Unité de sortie (200, 300) d'un entraînement de calage (160) ou d'un entraînement azimutal d'une éolienne (100), comprenant
- un élément d'arbre (210, 310), avec un axe de rotation (206) et une surface périphérique extérieure (212) agencée coaxialement à l'axe de rotation qui s'étend dans le sens axial d'une extrémité d'entraînement (202, 302) à une extrémité de sortie (204, 304), pour la transmission d'un couple d'entraînement à l'extrémité de sortie,
- un pignon (208, 308) agencé au niveau de l'extrémité de sortie coaxialement à l'axe de rotation, ou un logement de pignon pour la réception résistante à la rotation d'un tel pignon,
- dans laquelle un conduit de câble (214) s'étend de la surface périphérique extérieure par l'élément d'arbre à l'extrémité d'entraînement ou à l'extrémité de sortie,
- dans laquelle, au niveau de la surface périphérique extérieure, au moins une première jauge d'allongement (220, 320, 602) est agencée avec au moins un premier câble de mesure (221, 321),
- dans laquelle l'au moins un premier câble de mesure s'étend d'au moins une première jauge d'allongement par le conduit de câble à l'extrémité d'entraînement ou à l'extrémité de sortie.

2. Unité de sortie (200, 300) selon la revendication précédente, dans laquelle le conduit de câble (214) s'étend de la surface périphérique extérieure (212) par l'élément d'arbre (210, 310) à un point frontal (228) à l'extrémité d'entraînement (202, 302) ou à l'extrémité de sortie (204, 304), et le point frontal ou une ouverture (315) du conduit de câble est agencé dans la zone de l'axe de rotation (206) au niveau de l'élément d'arbre (210, 310).

3. Unité de sortie (200, 300) selon l'une quelconque des revendications précédentes, dans laquelle un dispositif de transmission de données (230) est agencé au point frontal (228), et le dispositif de transmission de données est couplé au moyen du premier câble de mesure (221, 321) avec l'au moins une première jauge d'allongement (220, 320, 602) et le dispositif de transmission de données est réalisé pour la transmission de données électrique de l'unité de sortie (200, 300) à un récepteur de données, et dans laquelle le dispositif de transmission de données présente de préférence un transmetteur à bague collectrice, pour la transmission de données électrique d'une partie rotative à une partie fixe.

4. Unité de sortie (200, 300) selon l'une quelconque des revendications précédentes, comprenant une deuxième jauge d'allongement (222, 604) qui est agencée au niveau de la surface périphérique extérieure (212), dans laquelle la deuxième jauge d'allongement est agencée diamétralement à la première jauge d'allongement (220, 320, 602).

5. Unité de sortie (200, 300) selon l'une quelconque des revendications précédentes, comprenant une troisième jauge d'allongement (224, 606) et une quatrième jauge d'allongement (226, 608), dans laquelle la troisième jauge d'allongement est agencée dans un sens périphérique de l'élément d'arbre (210, 310) en déport de 90 degrés de courbure par rapport à la première jauge d'allongement (220, 320, 602) et à la deuxième jauge d'allongement (222, 604), et dans laquelle la quatrième jauge d'allongement est agencée diamétralement à la troisième jauge d'allongement.

6. Unité de sortie (200, 300) selon l'une quelconque des revendications précédentes, dans laquelle l'élément d'arbre (210, 310) présente une première section d'arbre avec un premier diamètre et une deuxième section d'arbre avec un second diamètre, dans laquelle le premier diamètre présente une dimension supérieure à celle du second diamètre, dans laquelle entre la première section d'arbre et la deuxième section d'arbre, une troisième section d'arbre est de préférence agencée avec une géométrie conique par rapport à l'axe de rotation (206).

7. Unité de sortie (200, 300) selon l'une quelconque des revendications précédentes, dans laquelle
au moins une jauge d'allongement
- de la première jauge d'allongement (220, 320, 602),
- de la deuxième jauge d'allongement (222, 604),
- de la troisième jauge d'allongement (224, 606) et
- de la quatrième jauge d'allongement (226, 608)
est agencée au niveau d'une ou de la surface périphérique extérieure (212) d'une ou de la troisième section d'arbre.

8. Entraînement de calage (160) d'une éolienne (100), comprenant au moins un moteur de calage (420), un engrenage de calage (422) avec un côté d'entraînement d'engrenage de calage et un côté de sortie d'engrenage de calage, et une unité de sortie (200, 300) selon l'une quelconque des revendications 1 à 7, dans lequel le moteur de calage est agencé au niveau du côté d'entraînement d'engrenage de calage et l'unité de sortie (200, 300) réalise le côté de sortie d'engrenage de calage ou est agencée au niveau du côté de sortie d'engrenage de calage.

9. Entraînement azimutal d'une éolienne (100), comprenant au moins un moteur azimutal, un engrenage azimutal avec un côté d'entraînement d'engrenage azimutal et un côté de sortie d'engrenage azimutal, et une unité de sortie (200, 300) selon l'une quelconque des revendications 1 à 7, dans lequel le moteur azimutal est agencé au niveau du côté d'entraînement d'engrenage azimutal et l'unité de sortie (200, 300) réalise le côté de sortie d'engrenage azimutal ou est agencée au niveau du côté de sortie d'engrenage azimutal.

10. Eolienne (100) comprenant
au moins un élément de la liste présentant
- une unité de sortie (200, 300) selon l'une quelconque des revendications 1 à 7,
- un entraînement de calage (160) selon la revendication 8, et
- un entraînement azimutal selon la revendication 9.

11. Procédé de fabrication d'une unité de sortie (200, 300) selon l'une quelconque des revendications 1 à 7, comprenant
- l'utilisation comme élément de sortie d'un élément d'arbre (210, 310), avec un axe de rotation (206) et une surface périphérique extérieure (212) agencée coaxialement à l'axe de rotation qui s'étend dans le sens axial d'une extrémité d'entraînement (202, 302) à une extrémité de sortie (204, 304), pour la transmission d'un couple d'entraînement à l'extrémité de sortie,
- l'introduction d'un conduit de câble (214) qui s'étend de la surface périphérique extérieure par l'élément d'arbre à l'extrémité d'entraînement (202, 302) ou à l'extrémité de sortie,
- l'agencement au moins d'une première jauge d'allongement (220, 320, 602) avec un premier câble de mesure au niveau de la surface périphérique extérieure,
- le guidage du premier câble de mesure par le conduit de câble.

12. Procédé de calibrage d'une unité de sortie (200, 300) selon l'une quelconque des revendications 1 à 7, comprenant
- la mise à disposition d'un engrenage de calage ou d'un engrenage azimutal avec un côté d'entraînement d'engrenage et un côté de sortie d'engrenage, dans lequel l'unité de sortie (200, 300) réalise le côté de sortie d'engrenage ou est agencée au niveau du côté de sortie d'engrenage,
- la fixation sans pouvoir tourner de l'unité de sortie dans la zone de son extrémité de sortie (202, 302),
- l'alimentation du côté d'entraînement d'engrenage en un couple prédéterminé,
- la détection d'un signal de sortie d'au moins une première jauge d'allongement (220, 320, 602),
- la réalisation du calibrage se basant sur la valeur du couple prédéfini et la valeur du signal de sortie détecté.

13. Utilisation d'une unité de sortie (200, 300) d'un entraînement de calage (160) ou d'un entraînement azimutal d'une éolienne (100) selon l'une quelconque des revendications 1 à 7, pour la détection d'un couple d'entraînement, dans laquelle l'unité de sortie (200, 300)
- comporte un élément d'arbre (210, 310), avec un axe de rotation (206) et une surface périphérique extérieure (212) agencée coaxialement à l'axe de rotation qui s'étend dans le sens axial d'une extrémité d'entraînement (202, 302) à une extrémité de sortie (204, 304) pour la transmission d'un couple d'entraînement à l'extrémité de sortie, et
- un pignon (208, 308) agencé au niveau de l'extrémité de sortie coaxialement à l'axe de rotation, ou un logement de pignon pour la réception fixe en rotation d'un tel pignon,
- dans laquelle un conduit de câble (214) est agencé pour l'utilisation de l'unité de sortie (200, 300) pour la détection du couple d'entraînement, lequel s'étend de la surface périphérique extérieure par l'élément d'arbre à l'extrémité d'entraînement (202, 302) ou à l'extrémité de sortie,
- au niveau de la surface périphérique extérieure, au moins une première jauge d'allongement (220, 320, 602) est agencée avec au moins un premier câble de mesure (221, 321), et
- l'au moins un premier câble de mesure (221, 321) est guidé de l'au moins une première jauge d'allongement par le conduit de câble à l'extrémité d'entraînement (202, 302) ou à l'extrémité de sortie.

14. Utilisation d'une unité de sortie (200, 300) selon la revendication 13 précédente, dans laquelle le conduit de câble (214) s'étend de la surface périphérique extérieure (212) par l'élément d'arbre (210, 310) à un point frontal (228) au niveau de l'extrémité d'entraînement (202, 302) ou au niveau de l'extrémité de sortie (204, 304), et le point frontal ou une ouverture (315) du conduit de câble est agencé dans la zone de l'axe de rotation (206) au niveau de l'élément d'arbre (210, 310).
